Europäisches Patentamt

European Patent Office

Office européen des brevets

(19)

(11) Veröffentlichungsnummer: **0 155 541**
**B1**

(12) **EUROPÄISCHE PATENTSCHRIFT**

(45) Veröffentlichungstag der Patentschrift: **02.05.90**

(51) Int. Cl.⁵: **A 22 C 13/00**

(21) Anmeldenummer: **85102016.4**

(22) Anmeldetag: **23.02.85**

(54) Schlauchförmige Verpackungshülle auf Basis einer Polyesterfolie.

(30) Priorität: **06.03.84 DE 3408159**

(43) Veröffentlichungstag der Anmeldung:
**25.09.85 Patentblatt 85/39**

(45) Bekanntmachung des Hinweises auf die
Patenterteilung:
**02.05.90 Patentblatt 90/18**

(84) Benannte Vertragsstaaten:
**AT BE CH DE FR GB IT LI LU NL SE**

(56) Entgegenhaltungen:
**EP-A-0 054 162
AU-A- 511 195
DE-A-2 105 833**

(73) Patentinhaber: **HOECHST
AKTIENGESELLSCHAFT
Postfach 80 03 20
D-6230 Frankfurt am Main 80 (DE)**

(72) Erfinder: **Klenk, Ludwig
Jungferweg 20
D-6227 Oestrich-Winkel III (DE)**
Erfinder: **Monzer, Helmut
verstorben (DE)**
Erfinder: **Strutzel, Hans
Edisonstrasse 12
D-6200 Wiesbaden (DE)**

**Beschreibung**

Die Erfindung bezieht sich auf eine schlauchförmige Verpackungshülle für pastöse Massen, insbesondere auf eine Wursthülle, auf Basis einer Polyesterfolie. Sie bezieht sich ferner auf ein Verfahren zu ihrer Herstellung sowie auf die Verwendung einer speziellen Polyesterfolie zur Herstellung dieser Verpackungshülle.

Es ist bereits bekannt, schlauchförmige Polyesterfolien mit niedriger Wärmeschrumpfung als Verpackungshüllen, insbesondere als Wursthüllen, zu verwenden. Diese Folien zeigen beispielsweise bei einer Dicke von 10 bis 15 µm unter Einwirkung von Wärme (100°C, 15 Min.) eine Schrumpfung von kleiner als 10, insbesondere kleiner als 5% in Längs- und Querrichtung. Diese Schläuche sind allerdings nahtlos. Um diese hohe Schrumpffestigkeit zu erreichen, muß man bekanntlich den durch eine ringförmige Düse extrudierten zunächst amorphen und dann durch nachfolgende Streckung orientierten Folienschlauch in einem anschließenden Schritt thermisch fixieren, wobei der Folienschlauch im gestreckten Zustand gehalten wird.

Dieses Verfahren zeigt den Nachteil, daß beim Strecken und Fixieren des extrudierten Schlauches das Verhältnis der in Querrichtung und Maschinenrichtung wirksamen Kräfte sich fast unbeeinflußbar selbst einstellt, so daß aus diesem Grund auch der erhaltene nahtlose Schlauch bezüglich seiner mechanischen Eigenschaften, insbesondere hinsichtlich seiner Festigkeit in Quer- und Längsrichtung auf bestimmte Werte festgelegt ist.

Innenbeschichtungen, die für die Verwendung des nahtlosen Schlauches als Verpackungshülle häufig erforderlich sind, müssen in das Innere des Schlauches eingebracht werden, was verfahrenstechnisch aufwendig ist und mit Störungen verbunden sein kann. Die für den Auftrag der Innenbeschichtung erforderlichen Dispergiermittel lassen sich nur schwierig entfernen und die Filmbildung auf der inneren Oberfläche des Schlauches ist nur schwer kontrollierbar.

In einer älteren Druckschrift (US—A—2,653,432) wurden auch schon schlauchförmige Verpackungshüllen beschrieben, die eine Naht aufweisen und aus einer flachen Bahn hergestellt werden sollen. Die längsaxial sich erstrekkenden Randbereiche der Bahn überlappen sich und werden mit einem zwischen den Randbereichen liegenden siegelfähigem Folienstreifen verbunden. Als geeignetes Bahnmaterial werden neben Cellulose auch thermoplastische Kunststoffe wie Vinylidenchlorid-Copolymere genannt. Abgesehen davon, daß die Festigkeit der Siegelnaht bei der Verarbeitung dieser Verpackungshülle unbefriedigend ist, zeigen Schläuche aus obigem thermoplastischem Kunststoff bei weitem nicht die mechanischen Eigenschaften, wie sie bei ihrer weiteren Verarbeitung, insbesondere beim Raffen und Füllvorgang, auf modernen, schnell-laufenden Maschinen erforderlich sind, um einen praktisch störungsfreien Ablauf zu gewährleisten. Die durch den Innendruck, besonders bei erhöhter Temperatur, entstehenden Tangentialspannungen führen bei derartigen Hüllen leicht zu unerwünschten Deformationen.

Es ist deshalb Aufgabe der Erfindung, eine Polyesterfolie mit hoher Schrumpffestigkeit anzugeben, die zur Herstellung von schlauchförmigen Verpackungshüllen, insbesondere Wursthüllen geeignet ist, welche eine Längsnaht aufweisen. Die Längsnaht soll eine hohe Festigkeit aufweisen, so daß sich der Schlauch problemlos raffen läßt und auch auf schnell laufenden Füllvorrichtungen weitgehend störungsfrei verarbeiten läßt. Eine weitere Aufgabe besteht darin, eine schlauchförmige Verpackungshülle zu finden, die sich auf einfachere, kostengünstige Weise herstellen läßt, wobei sich ihre mechanischen Eigenschaften in einem weiten Bereich variieren lassen und insbesondere ihre Festigkeit wesentlich verbessert ist. Die schlauchförmige Hülle muß—trotz ihrer Verdickung im Bereich der Nahtzone—eine gerade zylinderförmige Gestalt aufweisen, welche selbst bei erhöhter Temperatur und Innendruck erhalten bleibt und nicht deformiert wird. Außerdem muß sich die schlauchförmige Hülle eng, faltenfrei und ohne Lufteinschlüsse an den pastösen Inhalt anlegen, wozu eine ausreichende Flexibilität erforderlich ist. Somit muß die Verpackungshülle einerseits ausreichend flexibel, andererseits aber auch besonders fest sein. Schließlich ist es auch Aufgabe der Erfindung, ein besonderes Verfahren aufzuzeigen, mit dem sich diese Verpackungshüllen besonders einfach herstellen lassen. Diese Aufgabe wird gelöst durch die schlauchförmige Verpackungshülle mit den im Anspruch 1 genannten Merkmalen, durch das Verfahren, dessen Schritte im Anspruch 9 angegeben sind, und durch die Verwendungen nach Anspruch 12 und 13. Die abhängigen Ansprüche gegen besondere Ausbildungen der Verpackungshülle bzw. des Verfahrens an.

Mehrschichtige Polyesterfolien mit diesem Aufbau aus Trägerschicht und ein- oder beidseitiger Heißsiegelschicht wurden zwar schon in der DE—A—21 05 833 beschrieben, allerdings nicht für schlauchförmige Verpackungshüllen für pastöse Massen, die unter Aufdehnen der Hülle eingepreßt werden, wobei die Seigelnaht starken mechanischen Belastungen ausgesetzt wird. Die Folie soll nach Angaben der Druckschrift gleichzeitig als Gefrierbeutel und Bratfolie verwendet werden, in der die gefrorenen Lebensmittel aufgetaut und dann in der Hitze gekocht oder gebakken werden. Trotz der wesentlich geringeren Druckbelastung gibt die DE—A—21 05 833 allerdings die Lehre, die zur Heißsiegelung vorgesehene Schicht als siegelbaren Film auszubilden, der eine Dicke von 5 bis 10 µm aufweist. Trotz der höheren Belastung der Nahtzone wird erfindungsgemäß für die Heißsiegelschichten eine Dicke von gleich oder kleiner als 4 µm vorgeschlagen.

Entsprechend der vorliegenden Erfindung besteht die schlauchförmige Verpackungshülle aus einem ursprünglich blatt- oder bahnförmigen rechteckigen Zuschnitt oder einer endlosen Bahn aus einer mehrschichtigen Polyesterfolie. Der Einfachheit halber wird anstelle von "blatt- oder bahnförmigen rechteckigen Zuschnitten" und "endlosen Bahnen" nur von Folien bzw. Polyesterfolien gesprochen. Die Folie ist entlang ihrer Längsachse gebogen und zu einem Schlauch geformt, wobei die einander sich genäherten Ränder der Folie in einer Nahtzone miteinander verbunden sind. Der Aufbau der Verpackungshülle in der Nahtzone sowie die Schlauchformung und Bildung der Nahtzone erfolgt wie beispielsweise in der EP—A—0 054 162 (vgl. Fig. 3, 4 und 7) und EP—A—0 080 120 beschrieben. In diesen Druckschriften besteht die Folie allerdings aus Cellulose.

Die Nahtzone kann auf verschiedene Weise ausgebildet sein. So können sich die beiden Ränder der Folie überlappen und sind dann direkt miteinander verbunden. Hierbei endet die Schlauchinnenseite in der Randzone auf der Schlauchaußenseite, so daß sich im Nahtbereich die eine Folienoberfläche (z.B. die äußere) mit der anderen Folienoberfläche (d.h. mit der inneren Oberfläche) berührt. Zur Herstellung dieser Heißsiegelnaht ist es deshalb erforderlich, daß die mehrschichtige Polyesterfolie auf beiden Oberflächen eine Heißsiegelschicht aufweist.

Bei der Herstellung der Überlappungsnaht ist es möglich zusätzlich einen Folienstreifen zu verwenden, der beispielsweise in die Überlappungsnaht zwischen den beiden Randzonen eingelegt ist oder sich auf der Schlauchaußenseite oder Schlauchinnenseite befindet.

Gewöhnlich wird aber der Folienstreifen nur dann verwendet, wenn die beiden Ränder der Folie eine Stoßnant bilden und sich somit nicht überlappen. Der Folienstreifen überdeckt dann beide Randzonen sowie den zwischen den beiden Randzonen eventuell vorhandenen Zwischenraum, so daß die Stoßnaht etwa die Mittellinie des Folienstreifens bildet.

Der Folienstreifen trägt auf der Oberfläche bzw. auf den Oberflächen, welche mit der (den) Folienoberfläche(n) in Kontakt tritt, eine heißsiegelfähige Beschichtung. Es ist vorteilhaft, wenn der Folienstreifen aus einer mehrschichtigen Polyesterfolie besteht, wie sie auch für das Schlauchmaterial gemäß der Erfindung vorgesehen ist. In bevorzugter Ausführungsform sind Trägerschicht und Heißsiegelschicht des Folienstreifens in ihrer chemischen Zusammensetzung und ihren mechanischen Eigenschaften identisch mit den entsprechenden Schichten des Schlauchmaterials.

Die Schlauchformung erfolgt beispielsweise entweder auf einer genügend langen Wegstrecke, so daß keine Verzerrung oder Faltenbildung erfolgt oder durch Umlenkung über ein schulterartiges Formwerkzeug; mittels am Schlauchumfang angreifender Transportelemente wird die zu einem Schlauch geformte Folie über die Oberfläche eines im Schlauchinnern angeordneten Stützkörpers bewegt. Der eventuell verwendete Folienstreifen wird vor dem Nahtschluß auf die zur Heißsiegelung vorgesehene Stelle, d.h. gewöhnlich zwischen die überlappenden Randzonen oder auf die beiden aneinander stoßenden Ränder, geführt.

Die Versiegelung erfolgt z.B. durch Kontakt mit einer auf eine bestimmte Temperatur geheizten Siegelbacke. Für die Versiegelung kann jedoch auch jede andere Wärmequelle in Frage kommen, wie beispielsweise IR-Strahler, Hochfrequenz-Erwärmung, Heißluft oder Ultraschall.

Häufig ist es zweckmäßig, zusätzlich Druck auf die Siegelstelle auszuüben. Bei Verwendung einer Siegelbacke ist es vorteilhaft, Bahnbewegung und Druck-Temperatur-Versiegelung taktweise durchzuführen. Es ist aber auch möglich, mit einer angepreßten und geheizten Rolle kontinuierlich zu versiegeln.

Es ist auch möglich, den Schlauch erst beim eigentlichen Füllvorgang herzustellen, wie es beispielsweise in der US—A—2,653,432 gezeigt wird. In diesem Fall wird die Polyesterfolie um das Füllrohr zu einem Schlauch geformt, wobei das Füllrohr als innerer Stützkörper dient. Durch das Füllrohr wird pastöse Masse in den Schlauch eingepreßt. Der gefüllte Schlauch wird portionsweise unterteilt, wie dies beispielsweise bei der Herstellung von Würsten üblich ist. Hierzu wird eine Abbindung oder ein Clip angebracht oder es erfolgt eine Versiegelung quer zur Längsrichtung.

Die zur Herstellung der schlauchförmigen Verpackungshülle verwendete mehrschichtige Polyesterfolie besteht aus einer Trägerschicht, die auf einer oder auf beiden Oberflächen eine Heißsiegelschicht aufweist. Jede Heißsiegelschicht kann bei erhöhter Temperatur und vorzugsweise unter Anwendung von Druck gegen die Heißseigelschicht auf der gegenüberliegenden Oberfläche der Folie oder gegen die Heißsiegelschicht auf dem Folienstreifen gesiegelt werden.

Die Trägerschicht besteht aus einem kristallinen, linearen Polyester, insbesondere aus Polyäthylenterephthalat. Die Herstellung dieses Polyesters kann durch Umsetzung von etwa gleichen Molanteilen Äthylenglykol und Terephthalsäure gebildet werden. Diese Verfahren sind allgemein bekannt.

Die Heißsiegelschicht beginnt in einem Temperaturbereich zu erweichen, der niedriger ist als der Schmelzpunkt des Polyesters der Trägerschicht. Ist der Polyester der Trägerschicht Polyäthylenterephthalat, so beginnt die Heißsiegelschicht unter 240, insbesondere unterhalb 200°C zu erweichen. Der lineare Polyester der Heißsiegelschicht ist im Gegensatz zur Trägerschicht amorph und ist vorzugsweise ein Copolyester, der aus Äthylenisophthalat und aus einem überwiegenden Anteil an Äthylenterephthalat aufgebaut ist. Insbesondere besteht dieser Copolyester aus 65 bis 90 Mol% Äthylenterephthalat und 35 bis 10 Mol% Äthylenisophthalat; er beginnt je nach Zusammensetzung zwischen etwa 90 und 200°C zu erweichen. Typische Copolyester dieses Typs haben eine inhärente Viskosität von 0,5 bis 0,7 dl/g, bestimmt bei einer Konzentration von 0,5 g Copolyester in 1 Liter Trifluoressigsäure bei 30°C. Auch die Herstellung des Copolyesters aus Äthylenglykol, Terephthalsäure und Isophthalsäure ist bekannt.

Für die vorgesehene Anwendung hat die Folie zweckmäßigerweise eine Dicke von etwa 9 bis 33 µm, wobei die Heißsiegelschichten eine Dicke von jeweils etwa 1 bis 4 µm zeigen und die Trägerschicht eine Dicke von etwa 8 bis 25 Mikrometer besitzt.

Die mehrschichtige Polyesterfolie kann nach üblichen Verfahren hergestellt werden, z.B. indem man zunächst eine selbsttragende Trägerschicht aus kristallinem linearem Polyester herstellt und dann auf deren Oberfläche(n) die Heißsiegelschicht(en) aufbringt, insbesondere durch Fällung aus einer Lösung oder als Schmelze durch Extrusionsverfahren. Die selbsttragende Trägerschicht ist vorzugsweise aus Polyäthylenterephthalat aufgebaut und ist biaxial orientiert und wärmefixiert.

Vorzugsweise erfolgt die Herstellung in einem Coextrusionsverfahren, wobei die Schichten in Kontakt gebracht werden noch während sie sich in geschmolzenem Zustand befinden. Die Bildung und Bindung der Schichten erfolgt entweder innerhalb des Extruderkopfes, aus dem dann eine zwei- oder dreischichtige Schmelze austritt, oder es werden einzelne Schichten aus einem Extruderkopf mit mehreren Düsen extrudiert und noch in geschmolzenem Zustand übereinander gebracht.

Die coextrudierte mehrschichtige Schmelze ergibt nach dem Abschrecken, z.B. auf einer Kühlwalze, eine amorphe Folie. Diese Vorfolie wird unter Erwärmen (70—100°C) durch Strecken in Maschinenrichtung und in Querrichtung biaxial orientiert und anschließend unter weiterem Erhitzen (180—240°C) in ihren gestreckten Dimensionen fixiert. Extrudieren und Abkühlen der Schmelze sowie Strecken und Warmefixieren erfolgt nach dem Stand der Technik. Die zur biaxialen Orientierung durchgeführten Streckungen werden simultan oder nacheinander in Längs- und Querrichtung durchgeführt. Erst durch die Wärmefixierung wird die Folie schrumpffest und erhält überraschenderweise eine Struktur, die sie für die vorliegende Anwendung zur Herstellung von Schläuchen besonders geeignet macht.

Zur Verpackung von Fleischwaren in Form von Wurstmasse, die zumindest beim Abfüllen pastös ist, kann die Verpackungshülle als einseitig verschlossener Abschnitt, aber auch als geraffter Schlauch verwendet werden. Das Raffen erfolgt vorzugsweise in der Weise, wie es in der EP—A—0 093 326 oder EP—A—0 100 495 beschrieben ist. Demnach wird die Nahtzone beim Raffvorgang spiralförmig um die Längsachse des gerafften Schlauches verlagert.

Die Verpackungshülle ist besonders geeignet als wasserdampf- und gasundurchlässige Wursthülle für Würste vom Leberwursttyp, insbesondere aber für streichfähige Rohwurst wie Teewurst und Mettwurst, bei deren Herstellung die Wurstmasse in kaltem Zustand abgefüllt wird. Bei Würsten der letzteren Art liegt die Hülle überraschenderweise besonders faltenfrei am Wurstbrät an. Als weiteres besonders geeignetes Einsatzgebiet ist die Verpackung von plastischen Massen auf dem Bausektor, insbesondere Dichtungsmassen, hervorzuheben.

Die Erfindung wird durch die Fig. 1, 2 sowie 4, 5 und 6 und die folgenden Beispiele näher erläutert. Der in Fig. 3 dargestellte Beutel gehört nicht zur Erfindung.

Es zeigt:

Fig. 1 die Polyesterfolie mit Heißsiegelschicht auf einer Oberfläche im Querschnitt,

Fig. 2 eine bevorzugte Ausführungsform der Verpackungshülle im Querschnitt, gebildet aus der Folie der Fig. 1,

Fig. 3 einen aus zwei Folien der Fig. 1 hergestellten Beutel in Perspektive,

Fig. 4 die Polyesterfolie mit Heißsiegelschicht jeweils auf beiden Oberflächen im Querschnitt,

Fig. 5 und 6 jeweils eine zweckmäßige Ausführungsform der Verpackungshülle im Querschnitt, gebildet aus der Folie der Fig. 4.

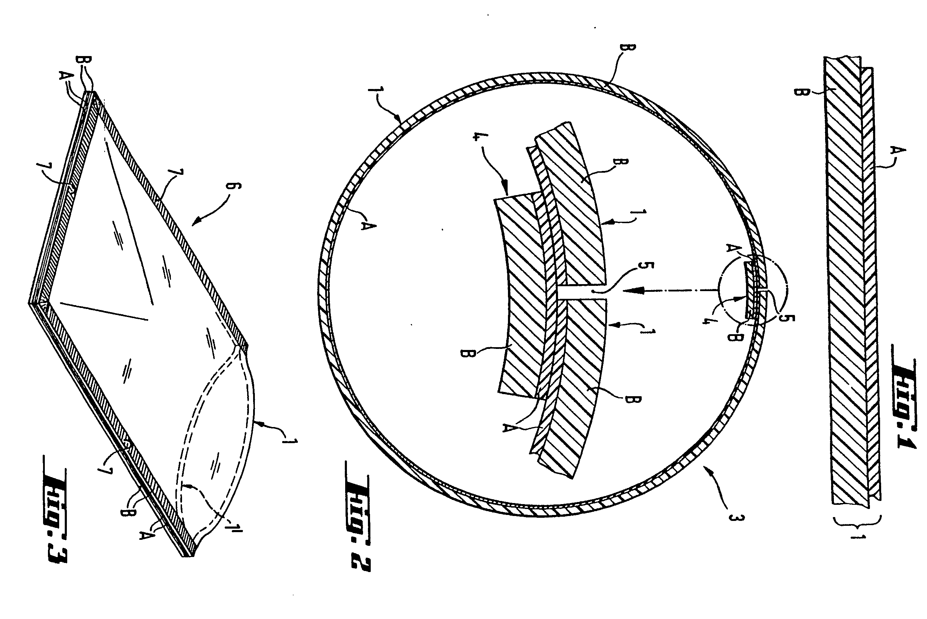

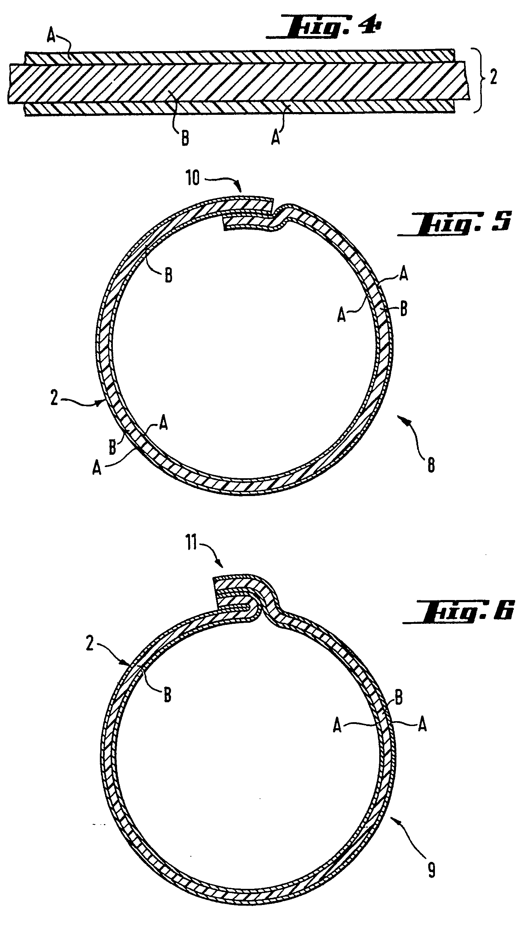

Die Polyesterfolien 1 bzw. 2 bestehen aus der Trägerschicht B und der bzw. den Heißsiegelschichten A. Anstelle der in Fig. 2 gezeigten Ausführungsform ist es auch möglich, die Folie 1 der Fig. 1 in der Weise zu biegen, daß die Schicht A die Außenseite des Schlauches 3 bildet. In diesem Fall befindet sich der Folienstreifen 4, der die gleiche Struktur AB aufweist, ebenfalls auf der Schlauchaußenseite und überdeckt entsprechend die Stoßnaht 5. Der in Fig. 3 dargestellte Beutel 6 besitzt eine umlaufende Siegelnaht 7 und besteht aus zwei übereinanderliegenden Folien 1 und 1'. Dieser Beutel ist zur Lösung der erfindungsgemäßen Aufgabe nicht geeignet. Im Gegensatz dazu zeigen die Verpackungshüllen 8 und 9 der Fig. 5 und 6 mit den Überlappungsnähten 10 und 11 bei erfindungsgemäßer Verwendung wesentlich bessere mechanische Eigenschaften.

Beispiel 1

Zur Herstellung einer beidseitig siegelfähigen Polyesterfolie wird Polyäthylenterephthalat (B) mit einer inhärenten Viskosität von 0,63 dl/g in einem Extruder aufgeschmolzen und zusammen mit einem, in einem zweiten Extruder aufgeschmolzenen Copolyester (A), bestehend aus 18 Gew.-% Äthylenisophthalat und 82 Gew.-% Äthylenterephthalat, mit einer inhärenten Viskosität von 0,62 dl/g coextrudiert, wobei der Copolyester (A) mittels eines Dreischicht-Coextrusionsadapters beidseitig auf das Polyäthylenterephthalat (B) aufgebracht wird. Der aus der Breitschlitzdüse austretende dreischichtige Schmelzfilm des Aufbaus ABA von 120 µm Dicke (15 µm Schicht A, 90 µm Schicht B und 15 µm Schicht A) wird auf einer gekühlten Walze abgeschreckt. Die erhaltene Vorfolie wird auf 80°C augeneizt und einem Längsstreckwerk zugeführt. Es besteht aus zwei hintereinander angeordneten Haltewalzeneinrichtungen, wobei die Walzen der nachfolgenden Einrichtung mit höherer Geschwindigkeit drehen als die der ersten. Die Längsstreckung der Folie um 300% erfolgt durch die unterschiedlichen Umfangsgeschwindigkeiten dieser angetriebenen Haltewalzen. Die längsgestreckte Folie wird anschließend bei 100°C um das 3,3-fache in einem Spannrahmen quergestreckt und anschließend unter Spannung bei 225°C thermofixiert. Die so hergestellten Folien können wie in Fig. 5 und 6 gezeigt, A gegen A gesiegelt werden. Die durch die Streckung erhaltene kristalline Struktur der Folie wird durch die Thermofixierung im Bereich der Heißsiegelschichten wieder rückgängig gemacht.

Beispiel 2

Zur Herstellung einer einseitig siegelfähigen Polyesterfolie wird analog Beispiel 1 verfahren. Zwei Schmelzen aus dem Polyester (B) und dem Copolyester (A) werden coextrudiert, wobei der Copolyester (A) mittels eines Zweischicht-Coextrusionsadapters einseitig auf das Polyäthylenterephthalat (B) aufgebracht wird. Der aus der Breitschlitzdüse austretende zweischichtige Schmelzefilm des Aufbaus AB von 120 µm Dicke (15 µm Schicht A, 105 µm Schicht B) wird, wie im Beispiel 1. beschrieben, abgeschreckt, biaxial gestreckt und unter Spannung thermofixiert. Die so hergestellten Folien 1 können, wie in Fig. 2 gezeigt, mit der Siegelschicht A gegen die Siegelschicht A eines Folienstreifens 4 gesiegelt werden. Ihre durch die Streckung erhaltene kristalline Struktur verliert die Folie im Bereich der Schicht A durch die Thermofixierung, d.h. diese Schicht liegt im Endprodukt überwiegend im amorphen Zustand vor.

Beispiel 3

Eine mit Überlappungs-Siegelnaht (Fig. 5) nach dem Stand der Technik hergestellte schlauchförmige Hülle aus der beidseitig siegelfähigen Folie des Beispiels 1 mit einem Durchmesser von 55 mm und 200 mm Länge wird einseitig durch einen Metallclip verschlossen, in ungewässertem Zustand mit dem offenen Ende auf das Füllrohr einer üblichen Füllmaschine aufgestülpt, mit einer Füllrate von 250 cm³/s befüllt und am offenen Ende ebenfalls mit einem Clip verschlossen. Die Füllung besteht aus einem Wurstbrät vom Leberwursttyp. Durch den beim Füllen aufgebrachten Innendruck vergrößert sich der Schlauchdurchmesser auf 56 mm. Eine Vielzahl derart gefüllter Hüllen werden in einem Brühschrank hängend während 60 Min. erhitzt, so daß eine Kerntemperatur von 77°C erreicht wird. Nach der Entnahme aus dem Brühschrank werden die Würste 4 Stunden bei Raumtemperatur und weitere 16 Stunden im Kühlschrank bei 4°C gekühlt. Der Durchmesser der wurst beträgt jetzt 55 mm, die Hülle liegt glatt auf dem Füllgut an.

Beispiel 4

Eine durch Versiegelung mit einem innenliegenden Folienstreifen hergestellte schlauchförmige Hülle (Fig. 2) aus der einseitig siegelfähigen Polyesterfolie des Beispiels 2 mit einem Durchmesser von 55 mm und 48 m Länge wird in bekannter Weise zu einer Raupe von etwa 54 cm Länge gerafft. Die Raupe wird auf das Füllrohr eines Füllautomaten mit integrierter Clip-Vorrichtung aufgeschoben und sodann mit dem gleichen Brät wie in Beispiel 3 intermittierend gefüllt, so daß in einem Zuge etwa 180 Würste von je rund 500 g entstehen. Der Durchmesser der Würste liegt zwischen 56 und 56,5 mm. Die weitere Behandlung erfolgt wie im Beispiel 3. Nach 20-stündiger Kühlzeit liegt die Hülle faltenfrei am Wurstbrät an.

Beispiel 5

Die nach Beispiel 2 hergestellte einseitig siegelfähige Folie wird nach dem Stand der Technik zu dem Schlauch der Fig. 2 (Durchmesser 30 mm) geformt. Von diesem Schlauch werden im flachgelegten Zustand je nach Füllgut Längen von 300 bis 600 mm abgeschnitten. Die erhaltenen Abschnitte werden einseitig mittels eines Drahtclips verschlossen. In einen derart gebildeten Abschnitt wird durch das offene Ende plastische Kittmasse unter Druck eingepreßt und das noch offene Ende ebenfalls mit einem Clip verschlossen. Die Verpackungshülle ist prall gefüllt und liegt am Füllgut faltenfrei an.

Beispiel 6

Die nach Beispiel 3 hergestellte schlauchförmige Hülle wird wie dort beschrieben mit Wurstbrät gefüllt. Das Wurstbrät besteht aus einer für Mettwurst typischen Wurstmasse, die nicht gebrüht werden darf. Die erhaltene Wurst zeigt eine faltenfreie Hülle, die glatt und ohne Lufteinschlüsse am Füllgut anliegt.

Die nach den Beispielen hergestellten schlauchförmigen Hüllen bilden gerade, zylinderförmige Schläuche, die ausgezeichnete mechanische Eigenschaften aufweisen. Sie zeigen einerseits hohe Festigkeit, auch im Bereich der Nahtzone, andererseits auch gute Flexibilität. Sie lassen sich einwandfrei raffen und auf schnell-laufenden Füllvorrichtungen verarbeiten.

**Patentansprüche**

1. Schlauchförmige Verpackungshülle für pastöse Massen, insbesondere Wursthülle, auf Basis einer Polyesterfolie mit niedriger Wärmeschrumpfung, dadurch gekennzeichnet, daß sie aus einer zu einem Schlauch gebogenen mehrschichtigen Polyesterfolie (1, 2) besteht, deren längsaxial sich erstreckenden Randbereiche überlappend und/oder mit einem Folienstreifen (4) eine Heißsiegelnaht (5, 10, 11) bilden, und die mehrschichtige Polyesterfolie (1, 2) eine Trägerschicht (B) auf Basis eines überwiegend kristallinen, linearen Polyesters sowie eine auf wenigstens eine der beiden Oberflächen der Trägerschicht (B) vorhandene Heißsiegelschicht (A) mit einer Dicke von gleich/kleiner als 4 Mikrometer auf Basis eines überwiegend amorphen, linearen Polyesters umfaßt.

2. Verpackungshülle nach Anspruch 1, dadurch gekennzeichnet, daß der lineare Polyester der Trägerschicht Polyäthylenterephthalat umfaßt.

3. Verpackungshülle nach Anspruch 2, dadurch gekennzeichnet, daß die Heißsiegelschicht bei einer Temperatur zu erweichen beginnt, die im Bereich zwischen 90 und 240, insbesondere unterhalb 200°C liegt.

4. Verpackungshülle nach Anspruch 3, dadurch gekennzeichnet, daß der lineare Polyester der Heißsiegelschicht(en) ein Copolyester ist, der aus Äthylenisophthalat und aus einem überwiegenden Anteil an Äthylenterephthalat aufgebaut ist.

5. Verpackungshülle nach Anspruch 4, dadurch gekennzeichnet, daß der Copolyester aus 65 bis 90 Mol% Äthylenterephthalat und 35 bis 10 Mol% Äthylenisophthalat aufgebaut ist.

6. Verpackungshülle nach einem der Ansprüche 1 bis 5, dadurch gekennzeichnet, daß die Trägerschicht eine Dicke von etwa 8 bis 25 μm und die Heißsiegelschicht(en) eine Dicke von etwa 1 bis 4 μm zeigen.

7. Verpackungshülle nach einem der Ansprüche 1 bis 6, dadurch gekennzeichnet, daß der Folienstreifen aus einer mehrschichtigen Polyesterfolie besteht, wie sie in einem der Ansprüche 1 bis 6 angegeben ist.

8. Verpackungshülle nach einem der Ansprüche 1 bis 7, gefüllt mit pastöser Masse.

9. Verfahren zur Herstellung der Verpackungshülle nach einem der Ansprüche 1 bis 7, dadurch gekennzeichnet, daß man die mehrschichtige Polyesterfolie, welche die Trägerschicht auf Basis eines überwiegend kristallinen, linearen Polyesters sowie die auf einer oder beiden Oberflächen der Trägerschicht vorhandenen Heißsiegelschichten mit einer Dicke von gleich/kleiner als 4 Mikrometer auf Basis eines überwiegend amorphen, linearen Polyesters umfaßt, um ihre Längsachse beigt, zu einem Schlauch formt, wobei die beiden einander genäherten längsaxialen Randzonen der Polyesterfolie aneinanderstoßen oder sich überlappen, und diese Randzonen aneinanderstoßend mit einem beide Randzonen überdeckenden Folienstreifen oder einander überlappend durch Heißsiegelung verbindet.

10. Verfahren nach Anspruch 9, dadurch gekennzeichnet, daß man einen Folienstreifen, der zwischen die sich überlappenden Randzonen eingelegt wurde, mit den anliegenden Randzonen durch Heißsiegelung verbindet.

11. Verfahren nach Anspruch 9 oder 10, dadurch gekennzeichnet, daß man in die Verpackungshülle während oder unmittelbar nach ihrer Herstellung pastöse Masse, vorzugsweise Wurstmasse, insbesondere vom Rohwursttyp, oder technische Abdichtungsmassen, einpreßt und die gefüllte Verpackungshülle portionsweise abtrennt.

12. Verwendung einer mehrschichtigen Polyesterfolie, umfassend die Trägerschicht sowie die auf wenigstens eine der beiden Oberflächen der Trägerschicht vorhandene Heißsiegelschicht mit den Merkmalen des Anspruchs 1, vorzugsweise mit einer Trägerschicht und Heißsiegelschicht(en) mit den Merkmalen nach einem der Ansprüche 2 bis 6, zur Herstellung der schlauchförmigen Verpackungshülle nach einem der Ansprüche 1 bis 8.

13. Verwendung der schlauchförmigen Verpakkungshülle nach einem der Ansprüche 1 bis 7 zur Verpackung von pastöser Masse, insbesondere Wurstmasse vom Rohwursttyp oder technischer Abdichtungsmasse.

**Revendications**

1. Enveloppe d'emballage tubulaire pour masses pâteuses, en particulier enveloppe d'emballage de saucisse, à base d'une feuille de polyester à faible contraction à la chaleur, caractérisée en ce qu'elle se compose d'une feuille de polyester (1, 2) multicouche recourbée en un tube, dont les zones marginales longitudinales forment un joint de thermoscellage (5, 10, 11), en se chevauchant et/ou avec une bande de feuille (4), et que la feuille en polyester multicouche (1, 2) comprend une couche support (B) à base d'un polyester linéaire essentiellement cristallisé ainsi qu'une couche thermoscellable (A), présente sur au moins une des deux faces de la couche support (B), ayant une épaisseur égale ou inférieure à 4 μm et formée d'un polyester linéaire essentiellement amorphe.

2. Enveloppe d'emballage selon la revendication 1, caractérisée en ce que le polyester linéaire de la couche support comprend du poly(téréphtalate d'éthylène).

3. Enveloppe d'emballage selon la revendication 2, caractérisée en ce que la couche thermoscellable commence à ramollir à une température se situant entre 90 et 240°C, plus particulièrement inférieure à 200°C.

4. Enveloppe d'emballage selon la revendication 3, caractérisée en ce que le polyester linéaire de la (des) couche(s) thermoscellable(s) est un copolyester constitué d'isophtalate d'éthylène et d'une partie prépondérante de téréphtalate d'éthylène.

5. Enveloppe d'emballage selon la revendication 4, caractérisée en ce que le copolyester est constitué de 65 à 90% en moles de téréphtalate d'éthylène et de 35 à 10% en moles d'isophtalate d'éthylène.

6. Enveloppe d'emballage selon l'une des revendications 1 à 5, caractérisée en ce que la couche support a une épaisseur d'environ 8 à 25 μm et la (les) couche(s) thermoscellabe(s) ont une épaisseur d'environ 1 à 4 μm.

7. Enveloppe d'emballage selon l'une des revendications 1 à 6, caractérisée en ce que la bande de feuille est constituée d'une feuille de polyester multicouche, comme celle mentionnée dans l'une des revendications 1 à 6.

8. Enveloppe d'emballage selon l'une des revendications 1 à 7, remplie d'une masse pâteuse.

9. Procédé de fabrication de l'enveloppe d'emballage selon l'une des revendications 1 à 7, caractérisé en ce que l'on recourbe, selon son axe longitudinal, la feuille en polyester multicouche comprenant la couche support à base d'un polyester linéaire essentiellement cristallisé ainsi que les couches thermoscellables, présentes sur l'une ou les deux faces de la couche support, ayant une épaisseur égale ou supérieure à 4 µm et constituées d'un polyester linéaire essentiellement amorphe, en ce qu'on la transforme en une enveloppe tubulaire, les deux zones marginales longitudinales de la feuille de polyester venant ainsi au contact l'une de l'autre ou bien se chevauchant, et en ce que l'on réunit ces zones marginales en contact au moyen d'une bande de feuille recouvrant les deux zones ou par thermoscellage desdites zones se chevauchant.

10. Procédé selon la revendication 9, caractérisé en ce que l'on réunit, par thermoscellage, une bande de feuille, qui a été insérée entre les zones marginales se recouvrant, aux zones marginales en regard.

11. Procédé selon la revendication 9 ou 10, caractérisé en ce que l'on introduit sous pression dans l'enveloppe d'emballage, pendant ou immédiatement après sa fabrication, une masse pâteuse, de préférence de la chair à saucisse, en particulier du type saucisse brute, ou bien des masses d'étanchéité, et que l'on découpe en portions l'enveloppe remplie.

12. Utilisation d'une feuille en polyester multicouche, comprenant la couche support ainsi que la couche thermoscellable présente sur au moins une des deux faces de la couche support et ayant les caractéristiques de la revendication 1, de préférence comprenant une couche support et une (des) couches(s) thermoscellables(s) avec les caractéristiques de l'une des revendications 2 à 6, pour la fabrication de l'enveloppe d'emballage tubulaire de l'une des revendications 1 à 8.

13. Utilisation de l'enveloppe d'emballage tubulaire de l'une des revendications 1 à 7 pour l'emballage d'une masse pâteuse, en particulier de chair à saucisse du type saucisse brute, ou d'une masse d'étanchéité technique.

## Claims

1. A tubular packing casing for pasty materials, in particular a sausage casing, based on a polyester film exhibiting high heat shrink resistance, characterized in that said casing is comprised of a multilayer polyester film (1, 2) which has been shaped into a tubing and whose edge zones extending in the direction of the longitudinal axis form a heat-sealed seam (5, 10, 11) obtained by overlapping said edge zones and/or by means of a film strip (4), and in that said multilayer polyester film (1, 2) is comprised of a carrier layer (B) based on a predominantly crystalline, linear polyester and of a heat-sealable layer (A) which is present on at least one surface of said carrier layer (B) and which has a thickness of 4 µm or less and is based on a predominantly amorphous, linear polyester.

2. The packing casing as claimed in claim 1, characterized in that said linear polyester of said carrier layer comprises polyethylene terephthalate.

3. The packing casing as claimed in claim 2, characterized in that said heat-sealable layer begins to soften at a temperature within the range of 90 to 240°C, in particular at a temperature of less than 200°C.

4. The packing casing as claimed in claim 3, characterized in that said linear polyester of said heat-sealable layer(s) is a copolyester of ethylene isophthalate and a predominant content of ethylene terephthalate.

5. The packing casing as claimed in claim 4, characterized in that said copolyester comprises 65 to 90 mole percent of ethylene terephthalate and 35 to 10 mole percent of ethylene isophthalate.

6. The packing casing as claimed in any of claims 1 to 5, characterized in that said carrier layer has a thickness of about 8 to 25 µm and that said heat-sealable layer(s) has (have) a thickness of about 1 to 4 µm.

7. The packing casing as claimed in any of claims 1 to 6, characterized in that said film strip is comprised of a multilayer polyester film in accordance with any of claims 1 to 6.

8. The packing casing as claimed in any of claims 1 to 7, which is stuffed with a pasty material.

9. A process for manufacturing the packing casing as claimed in any of claims 1 to 7, characterized in that said multilayer polyester film—comprised of said carrier layer based on a predominantly crystalline, linear polyester and of said heat-sealable layer(s) which are present on one or both surfaces of said carrier layer, have a thickness of 4 µm or less and are based on a predominantly amorphous, linear polyester—is bent about its longitudinal axis and shaped into a tube, such that the two longitudinally extending edge zones of said polyester film, which have been brought close to one another, either abut each other or overlap each other, and in that said edge zones are joined by heat-sealing performed either by sealing said two abutting edge zones to a film strip covering both edge zones or by directly sealing said overlapping edge zones.

10. The process as claimed in claim 9, characterized in that a film strip inserted between said overlapping edge zones is joined to the adjoining edge zones by heat-sealing.

11. The process as claimed in claim 9 or 10, characterized in that a pasty material, preferably sausage meat, in particular of the uncooked sausage type, or industrial sealing materials, is forced into said packing casing during or immediately after its manufacture and that the stuffed packing casing is cut into a plurality of individual casings.

12. Use of a multilayer polyester film comprised of said carrier layer and of said heat-sealable layer present on at least one of the two surfaces of said carrier layer, having the characterizing features of claim 1, and preferably comprised of a carrier layer and of heat-sealable layer(s) having the characterizing features of any of claims 2 to 6, for manufacturing said tubular packing casing as claimed in any of claims 1 to 8.

13. Use of the tubular packing casing as claimed in any of claims 1 to 7, for packing a pasty material, in particular sausage meat of the uncooked sausage type or industrial sealing materials.

*Fig.1*

*Fig.2*

*Fig.3*

EP 0 155 541 B1

Fig. 4

Fig. 5

Fig. 6